(19) Europäisches Patentamt / European Patent Office / Office européen des brevets

(11) **EP 3 115 666 A1**

(12) **EUROPEAN PATENT APPLICATION**

(43) Date of publication:
**11.01.2017 Bulletin 2017/02**

(51) Int Cl.:
*F16K 37/00* (2006.01)  *G01M 3/08* (2006.01)

(21) Application number: **15175903.2**

(22) Date of filing: **08.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Ulefos Esco AS**
**3616 Kongsberg (NO)**

(72) Inventors:
• **Nygård, Anders**
  **3610 Kongsberg (NO)**
• **Hellerud, Wiggo**
  **1405 Langhus (NO)**
• **Hjorth, Sigmund**
  **2386 Brumunddal (NO)**
• **Jurkin, Raul**
  **13422 Tallinn (EE)**
• **Westerlund, Owe**
  **85103 Sundsvall (SE)**

(74) Representative: **Koppel, Mart Enn**
**KOPPEL patendibüroo OÜ**
**Roseni 10-151**
**10111 Tallinn (EE)**

(54) **A SMART VALVE AND AUTOMATED MONITORING OF THE CONDITIONS OF THE PIPINGS USING THE SMART VALVES**

(57)  A smart water valve for water mains, comprising a body comprising a flow path inside, an inlet port and a outlet port for connecting pipes, a flow control element for controlling the flow through the flow path, and an actuator for moving the flow control element between on and off position, said valve comprising a pressure sensor (6) within said body, said pressure sensor having electrical connections extending from inside said valve to be electrically connected to a processing device (8), configured to determine conditions of the pipings based on the readings of said pressure sensor. The smart valve may additionally comprise other types of sensors.

Fig 1

EP 3 115 666 A1

**Description**

**Technical field**

The present invention relates to valves for fluid, including water and wastewater valves, including gate valves used in watermains, such valves equipped with one or more sensors for automatic monitoring the conditions of the pipings, including for water and wastewater, processing industry, oil and other systems, including for automatic leak detection.

**Background art**

Known is US2011/0083746 describing a device comprising a force sensor such as load sensor, load cell, strain gauge, to monitor the force (or pressure) exerted on the stem of a valve member. Incorporation of the force sensor facilitates monitoring of valve performance throughout the life of the valve, as well as monitoring of the flow line (e.g., process) pressure. In addition, the flow line pressure (i.e., the pressure of the process fluid being regulated by the valve) may be monitored both when the valve is in a shut-in condition (e.g., no fluid flow through the valve flow path) and when the valve is in an open position. In other embodiments, the flow line pressure may otherwise be monitored via a pressure gauge, pressure transducer, or other pressure element installed directly into the flow path of the valve. A benefit of using the force sensor to monitor flow pressure is the elimination of a possible leak path associated with an instrument tap (i.e., with a pressure gauge) installed directly in the flow line, for example.

Incorporation of the force sensor in the valve will generally provide for improved monitoring of the valve performance without disassembly of the valve. The sensed force information may be employed, for example, to alter the maintenance program of the valve. In addition, the force sensor may be employed to monitor the flow line pressure (i.e., the pressure exerted by the process fluid in the flow path of the valve) via the pressure acting on the valve stem's cross sectional area. Further, incorporation of a displacement transducer in the valve to measure stem movement may provide additional information with regard to valve performance. Examples of the smart valves disclosed herein may include flow valves, gate valves, butterfly valves, plug valves, ball valves, needle valves, and so on. Whatever the type of valve, it is generally beneficial to monitor the performance of the smart valve, as well as to obtain information about the fluid the smart valve is regulating. However, such known valve can only provide information when pressure is applied to the stem and when the stem is moved.

Known is US20110066297 describing a remote monitoring and control system comprising synchronized wireless MESH technology for remote monitoring and control of utility grids (e.g., utility meters), commodity distribution networks, industrial equipment, and infrastructure including remote disconnection/connection and self-generating power.

Also known is a system further comprising a sensor coupled to the processing module configured to detect damage to the system. The sensor upon detecting damage to the system may send information to the processing module which generates a message and sends it to the transceiver to send the message via a network to a to remote coordinator in response to the sensor detecting damage to the system. The sensor may be an optical sensor, imaging sensor, acoustic sensor, motion detector, water quality sensor, leak detector, temperature sensor, water pressure sensor, a water composition sensor. The sensor may be a flow sensor adapted to detect reverse water flow and to cause the shut off valve to trigger when reverse water flow exceeds a predetermined volume. The sensor may comprise a plurality of Hall effect switches for detecting a water flow through the meter and a counter device for quantifying the water flow into a flow rate.

Also known is a nutating disk type positive displacement water meter including an integrated energy harvesting device and shut-off/turn-on valve configured to open or close the flow of a commodity through a supply line.

Known is US2011025511 describing device that consists of well known elements arranged to detect an involuntary consumption and alert a person when such is occurring. A pressure gage coupled with a timing device measures in a constant manner the internal pressure of a pipe and establishes a reference pressure. Upon the opening of any outlet of the network, the measured pressure will fall below this reference pressure value. If the measured pressure does not return to the reference pressure value within a stipulated time, it would be safe to assume that involuntary consumption is happening. Temperature is monitored and reported whenever it reaches a very low or freezing level. The device provides for audio and visual alerts to bring about the correction of the involuntary situation.

Known is US20120056711 describing a system for remotely operating endpoint devices, such as valves for utility services, comprises a server, one or more network access hubs, and one or more endpoint devices. The network access hubs communicate with the server through a network and communicate wirelessly with the endpoint devices. The network access hubs transmit instructions to the endpoint devices to control the operation of the endpoint devices, e.g., to close valves.

Known is EP2006654 describing a method of detecting leakage in a force main involves placing at least two spaced sensors on the force main. Liquid is pumped through the pipe by a pump. The pump is shut down for an interval of time, and during the period following pump shutdown while negative pressure is present in the pipe, signals are generated at the sensors due to noise (acoustic signal) or vibration resulting from fluid being drawn into the pipe. The position of a leak in the pipe is determined by correlating the leak noise signals generated while the pipe is under negative pressure. Alternatively, the invention can be applied to a pressurized pipe, in which case conditions of negative pressure can be deliberatively created for a period to draw in fluid from the outside.

Known is US20080300803 describing methods and systems that facilitate the detection of leaks in a pressured pipe. The system includes one or a plurality of pressure sensors, placed at one or several locations along the pipe, and a power source providing power to the one or plurality of pressure sensors. Also a computing device, a communications device, and an algorithm is included. The algorithm assesses data received from the communications device, the data containing information from the one or plurality of pressure sensor(s), wherein the algorithm determines the presence of a pressure leak in the pressurized pipe based on a first pressure profile versus a second pressure profile.

Known is US20090303057 describing a device for detecting a leak through a closed valve disposed between an upstream pipe and a downstream pipe of an industrial process. An insertable plate is coupled to the valve in the pipe in-line with the fluid flow. A sensor couples to the flow and provides a signature output. A leak detector is coupled to the sensor and adapted to detect a leak through the valve based upon the signature output. In open positions, measured open valve signature is compared with stored reference signature for that open position.

Known is EP 1452846 describing a pressure measuring method and device that are capable of easily measuring the volume of a pipe that is an object of inspection and of eliminating the influences of a change in temperature in the pipe.

Known is US5708195 describing a system, comprising a plurality of pressure sensors installed on pipelines to measure pressure of a fluid. Each of these pressure sensors presumes a breakage location in cooperation with other neighboring sensors on the basis of a pressure change of the fluid and transmits information relating to the presumed breakage location. The pipeline breakage sensing system further includes a pressure sensor for detecting the occurrence of a seismic earthquake event, in addition to a managing center for sensing a breakage location on the basis of information transmitted from respective pressure sensors and by calculating a time correlated comparison between the superimposed pressure readings from neighboring pressure sensors used to detect the occurrence of such a fluid pressure change. Thereby, breakage of a pipeline network is sensed and the quantity of flow delivered through an affected pipeline is adjusted, stopped or regulated by control of one or more valves in accordance with a predetermined, weighted system of fluid flow requirements, customer ordered priorities and customer demand levels.

Known are number of gate valves for watermains, for example EP 1373768, EP1636519, EP2224154 and EP2673537. Those gate valves do not provide valve position status such as open-close status and do not include for detecting the conditions of the piping, for example, a leak from the pipings..

What is needed is a smart valve comprising an integrated sensor of sensors such as fluid pressure sensors or a valve position sensors such as valve open-close sensors, and a system and method for determining the conditions of the piping, e.g., for leak detection in watermains. By integrating fluid pressure sensors and valve open-close sensors into the valve and adding an energy harvesting unit and a communication module, those autonomous valves provide valuable data for monitoring the conditions of the pipings such as watermains, including leak detection analysis.

**Disclosure of the invention**

The smart valve according to the invention comprises a body comprising a flow path inside, an inlet port and an outlet port, the smart valve further comprising a flow control element for controlling the fluid flow through the flow path, and an operator device for actuating the control element (such as stem extension actuator), said valve comprising a fluid pressure sensor at the bottom of said body at the flow path, said pressure sensor connectable to a processing device over a wired connection, said processing device comprising a microprocessor and a communication module connectable to a network over a wired or wireless communication.

The valve may further comprise a valve position sensor inside said body attached to said flow control element for determining the position of the flow control element in respect to the flow path, wherein the valve position sensor, such as valve open-close sensor is also electrically connectable to said processing device.

The valve further comprises a power supply module to provide energy supply to said processing device, including said communication module. Said power supply module preferably comprises an energy harvesting device such as a flow energy harvesting device or a vibration energy harvesting device. Said power supply module preferably additionally comprises a rechargable battery or a supercapacitor to cover the energy need of the processing device when the energy from the energy harvesting device is not sufficient.

The flow control element is preferably a disk or a wedge that can be linearly moved between first position on the flow path (close position) and the second position away from the flow path (open position). The body comprises a void for accomodating said flow control element when away from the flow path.

According to one embodiment, the valve position sensor is a position sensor, e.g., a magnetic position sensor, e.g., a linear magnetic position sensor, reed switch or other sensor. Such sensor magnetically connects said flow control element to a receiving part of the sensor. Sensor may comprise a plastic rod attached to said body inside said flow substantially parallel to the moving axis of the flow control element, said plastic rod mechanically attached to an inside wall of the body, and a second element on said plastic rod, said second element mechanically connected to said flow control element, wherein said second element comprises a magnet and said plastic rod comprises at least two switches operated by magnet so that first of said switches is operated when the flow control element is in closed position and said second of said switches is operated when the flow control is in open position. The valve position sensor may include position sensor for determining the exact valve position, and additionally a sensor for determining the fully open and fully close position of the valve. The later is less accurate as to the positin of the valve, but consumes less energy than the former.

The valve preferably further comprises a processing device, attached to the valve or integrated with it. The processing device comprises a microcontroller and a tranceiver module, e.g. wired or wireless communication module. The processing device is powered by energy harvesting device, by a rechargable battery or a supercapacitor or by combining such devices. As the valves are installed underground, either buried, or into a manhole and low power consumption of the processing device is very critical, the tranceiver module is preferably connected by wire to an above the ground communication module adapted to interact with a central system and/or with nearby communication modules of other nearby valves, through point to point communication or using MESH topology.

The above the ground communication module comprises a microcontroller, a first tranceiver for connecting with the processing device and a second tranceiver, such as GPRS, Zigbee or other (custom) RF module, for connecting with the central system and/or nearby communication modules of other nearby valves.

An automated monitoring system according to the invention comprises a plurality of smart valves installed on underground pipings for transmitting a fluid such as water or wastewater, and adapted to receive readings from said sensors integrated into said valves, and forwarding data to a central computer system and/or to nearby smart valves for determining and monitoring the conditions of the piping, such conditions may include determining leaks in the pipings based on the readings of said sensors.

**Brief description of drawings**

Fig 1 is an exploded view of the smart valve according to one embodiment;

Fig 2 is an entire system configuration diagram according to one embodiment of the invention

Fig 3A and Fig 3B depict an integrated stem extension and a street box for the smart valve according to one embodiment of the invention.

**Examples for carrying out the invention**

One or more specific embodiments of the present invention will be described below. These described embodiments are only exemplary of the present invention.

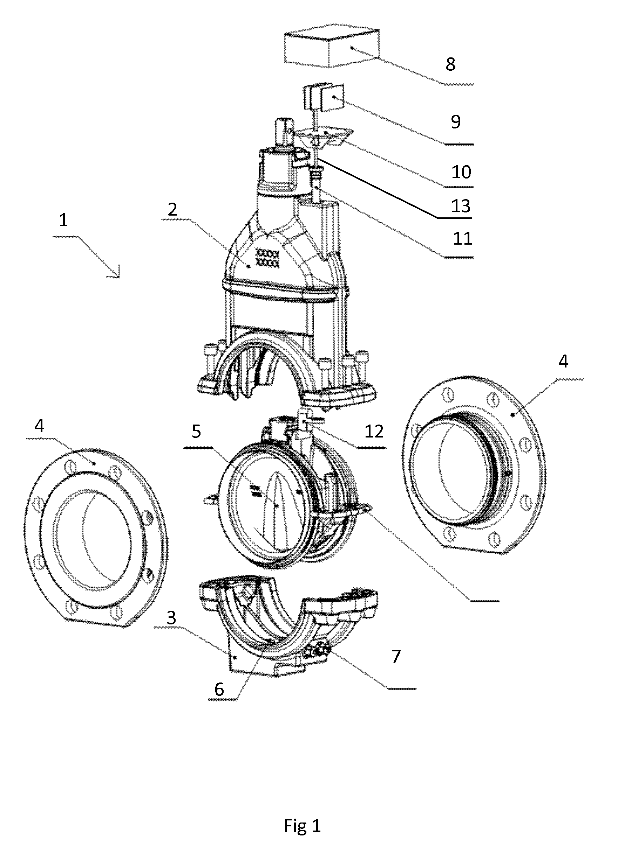

The smart water valve according to first embodiment is depicted on Fig 1. It is based on Aquosus product family by Kongsberg ESCO AS (Norway), see, e.g., EP1636519 and

EP2224154. The smart valve is a gate valve 1 that comprises a valve body comprising a top part 2, a bottom part 3, and inlet/outlet parts 4, wherein the top and bottom parts define a cavity in a valve body and where a wedge 5 is linearly movable in said valve body between two extreme positions, wherein in the first, closed position forming in the closed position a barrier between the inlet and outlet parts, thereby preventing fluid from flowing through the body, while the wedge is moved out of said cavity in the second, open position, thereby allowing said fluid to flow through the body.

Pressure sensors 6 are attached to the bottom of the body cavity in the area under the wedge. Alternatively, the pressure sensors can be located in the top area of the bofy cavity, or in other location near housing 8 using cavity or pipes for fluid contact with pressure sensors. Electrical connections are exiting from the valve through an opening 7 to be connected to a processing device having an housing 8 comprising one to several circuit boards 9. The processing device 8 is preferably as close to the sensors as possible to reduce the impact of the wiring.

A linear magnetic position sensor 11 is attached to the wall of the body cavity, said sensor comprising a rod 13 and a magnet 12 coupled to said wedge. The sensor 11 is appropriately dimensioned based on the dimensions of the valve. For example, for DN150 valve, the rod with 150 mm working range covers the movement limits of the wedge.

A vibrational energy harvesting device such as piezo-film vibration energy harvesting device may be attached to the valve to power the electrical components of the valve, including the processing device. The vibrational energy harvesting device is preferable where the cleaning robots, inspection cameras and plugs (so called polly pigs) must pass through the valve.

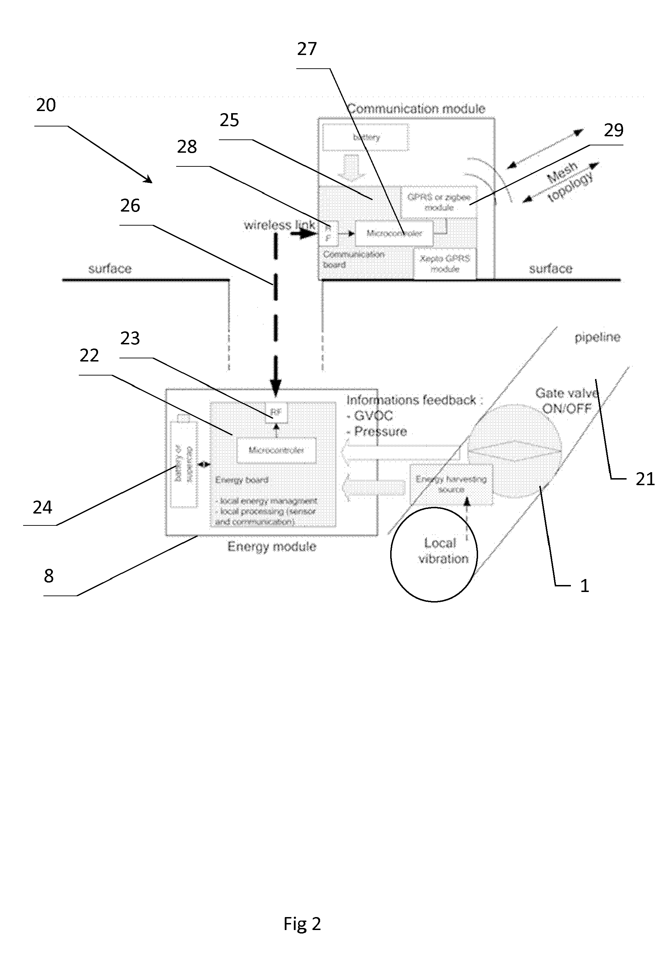

Fig 2 depicts an entire system 20 according to one embodiment of the invention. The system 20 comprises at least one smart valve 1 installed on an underground pipeline 21, wherein the smart valve is connected to a processing device 8 integrated with or located in close approximity to the smart valve for receiving readings from the smart valve, such as pressure readings and valve position, such as valve open-close information. The processing device comprises microcontroller 22, a radio frequency tranceiver 23 and a power source 24 such as a battery, rechargable battery or supercapacitor. The processing device is connected to a communication module 25 located at the ground over a short range wireless link 26. Alternatively, the processing device and communication module can be connected via a wire (via a cable). The communication module 25 comprises a microcontroller 27, a first tranceiver 28 for short range wireless communication with the processing device 8, and a second wireless tranceiver 29 for wireless communication over wireless link 30 with a central computer system over a, e.g., a mobile network, e.g., using a GPRS network, or with similar smart valves as described above, and located nearby, using, e.g., point to point communication or MESH topology when some smart valves act as slaves and one as a master for gathering data from slave smart valves, and forwarding the data in processed or unprocessed form to the central server via, e.g, mobile network, e.g., GPRS network.

A smart valve according to invention is installed underground often in wet and rarely accessed manholes, also possibly underwater for unpredictable amount of time, so the IP68 protected housing and cabling is used. Also, the expected lifetime of selected components has to be appropriate.

The electric cabling may be either incorporated into the valve body or run on the outer or inner wall with suitable protection and connectors for water environment.

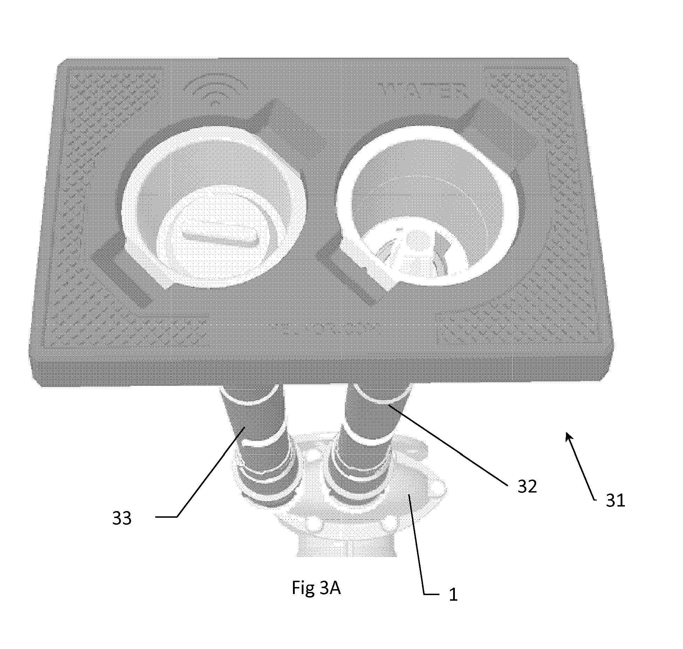

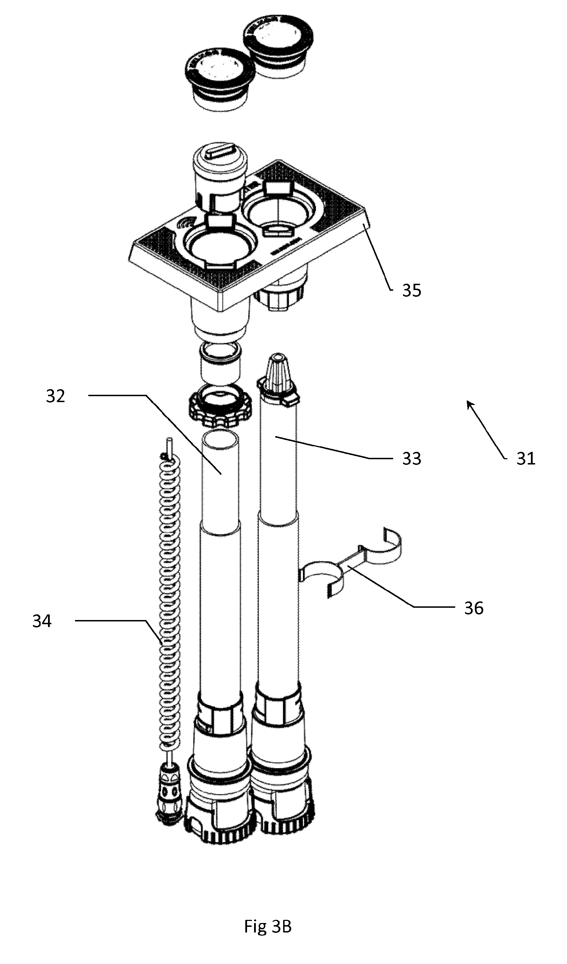

For locations where the smart valve is not installed inside a manhole but buried under the ground (for example, in Sweden), also a new type of street box assembly 31 as shown in Figs 3A and 3B is suggested.. Known existing street box has a spindle extension 32 to change the wedge position of a valve from the ground level. The modified street box assembly additionally comprises a second extension rod 33 to house data and power cables 34 to the ground street box unit 35 where the data will be transferred over wireless connection to servers.Some electronic components of the smart valve can be installed within the street box for easier access.

The vibration energy harvesting device can be provided as a separate unit that can simply be added as an extension to valve on a flanged pipe. There are several benefits for keeping it separately: it requires less modifications into standard valve (easier production of different models), the piezo vibration will have more distance from pressure sensors to minimize the effects on signal quality, multiple piezo elements could be used when needed (in case one element cannot produce enough energy or different elements are needed to address different velocities of the water flow), and modular design makes the system more flexible and use different power sources depending on the environment and exact needs.

**Use of the valve and a system comprising such valves**

The primary usage of the valve and the system is to collect data from Water Supply Network (WSN) via autonomous or low maintenance sensor network. Some example applications include:

- gathering WSN specific information into supervisory control and data acquisition (SCADA) network, for example, valve Open/Close status; pressure in valves; readings from different types of sensors, e.g., flow, acoustic, water quality related, and other;

- helping to calibrate the WSN, for example, using the pressure sensors data;

- detecting leackages by using pressure difference data, for example, also using flow meters data or flow or other data.

Table 1. System configuration examples (non-exhaustive list)

| Usage | Sensors that could be integrated to the valve | Power source options | Communication module options | Data connections | Data interpretation / usage possibilities |
|---|---|---|---|---|---|
| Inside the manhole (with Intelligent manhole cover) | Pressure sensor(s) • 100 and 300 psi and other Accuracy • Very accurate (more calibration) • Medium accuracy (reasonably calibrated and tested) | Harvested vibration enercy (for example by piezoelectric element) | GSM / GPRS | Xepto web interface | In the analog-digital converter included to the valve |
| Without manhole (with Helnor extension rig and streetbox) | Temperature | Harvested flow energy or turbine | Local mesh network (for example Zigbee or custom RF) | API for third parties | In the main electronics board in the valve |
| | Conductivity (for determining Chlorine level) | Battery | Wired connection | SCADA interfaces | Partially in the server when necessary, after receiving it from Advocate system |
| | Flow sensor | Solar | | Interfaces with leak detection software | In the SCADA system or other user interface (MS Excel is the easiest) |
| | Acoustic | Wired power source | | | |
| | Pressure waves | | | | |
| | Wedge position closed or Open (GVOC sensor) | | | | |

Several leak detection methods can be used in the system. In general the leak detection methods can be classified into three categories: biological methods, hardware-based methods and software-based methods. Software-based methods use flow, pressure, and/or other data provided by a SCADA system. Different approaches are used:

- Flow or pressure change. In this case it is assumed that a high rate of change of flow or pressure at the inlet or outlet indicates the occurrence of a leak. The change of pressure or flow in the system is compared to a predefined value. If the parameter rate of change is higher within a specific time period, an alarm is generated.

- Dynamic model based system. There are various approaches to mathematically model the fluid flow within the pipeline. Leakages in the pipeline are detected using mathematical models based on physical laws such as conservation of mass, conservation of momentum and conservation of energy. Leaks are detected based on the discrepancies between the calculated and measured values. Real-time pressure and/or flow data is used to "train" the models and detect the leakages in the system.

- Pressure point analysis. It is assumed that the occurrence of a leakage causes a pressure drop in the line. Simple statistical analysis of the pressure measurements is used to detect the changes in the mean value. If the decrease in more than a predicted value, a leak alarm is generated.

- Transient-based leaks detection. One possibility is to create an artificial pressure wave in the system and analyse the reflections from the boundaries and from the leak. The measured pressure response can be used to determine the location and size of the leak.

Other way is to detect the low pressure surges generated by pipe rupture. Using the arrival time of the negative wave at each measurement transducer and the wavespeed, the location of the leak can be determined.

Leakage is pressure dependent and with a simple formulation the leak flow rate at node i, Qi, can be expressed as:

$$Q = K_i P_i{}^\alpha$$

Ki - emitter exponent at node i

Pi - pressure at node i

$\alpha$ - leak exponent (normally varies between 0.5 - 1.5, depending on leak type that is searched)

The emitter coefficient Ki is to be optimized as the indication of possible leakage (greater than zero). It is not reasonable to measure pressure at each network node (too expensive). Therefore a leak is searched inside a group of nodes that may belong into the same area (proximity of measured pressure node).

Whilst the optimal emitter exponent is searched by chosen calibration algorithm, the optimization itself is defined so that the difference in between measured and modelled pressure is minimum, meaning that model predicts the true network as close as possible.

Such leakage models are normally used for possible leak area detection. After leak awareness studies, the leak pinpointing is usually carried out pipe by pipe. Additional pressure measurements can be taken by the same equipment as for awareness studies but the scope of the leak calibration has changed from area based studies into pipe based studies.

**Claims**

1. A smart valve, comprising:

   a body comprising a flow path inside,
   an inlet port and a outlet port for connecting pipes,
   a flow control element for controlling the flow through the flow path, and
   an operating device for actuating the flow control element between on and off position,
   **characterized in that**
   said valve comprising a pressure sensor within said body, said pressure sensor is electrically connected to a processing device, said processing device configured to receive readings from said pressure sensor according to preset schedule, and to forward data to a communication module for determining and monitoring the conditions of the water mains.

2. A smart valve as in claim 1, comprising a valve position sensor inside said body and attached to said flow control element to determine the position of the flow control element in respect to the flow path, and electrically connected to said processing device.

3. A smart valve as in claims 1 to 2, wherein said flow control element is a wedge, linearly movable between open and closed positions on guides attached to the inner wall of the body and said open-close sensor is a linear magnetic position sensor.

4. A smart valve as in claims 1 to 3, wherein said leak sensor is at least one pressure sensor located at the bottom part of said flow path.

5. A smart valve as in claims 3 to 4, comprising a first pressure sensor on one side of the wedge and a second pressure sensor on the other side of the wedge for determining the pressure difference on different sides of the wedge when the wedge is not fully opened position.

6. A smart valve as in claims 1 to 5, wherein said processing device is integrated with the body.

7. A smart valve as in claim 6, wherein said processing device comprising a tranceiver for sending and receiving short range radiosignals.

8. A smart valve as in claims 1 to 7, wherein said valve comprises an energy harvesting device within said body, said energy harvesting device adapted to power said processing device.

9. A smart valve as in claims 8, wherein said energy harvesting device is vibrational energy harvesting device attached to said body.

10. A smart valve as in claims 1 to 9, said processing device configured to transmit and receive short range signals to an above the ground communication module.

11. A smart valve assembly, comprising the smart valve as in any of the claims 1 to 10, wherein the smart valve is to be installed underground, and an above the ground unit, comprising an extension rod having one end fixed to said for operating device for operating the smart valve and a tubing for housing wiring for electrically connecting said processing device to a above the ground processing unit.

12. A smart valve assembly as in claims 10 to 11, said above the ground unit comprising a power supply unit for powering said processing device, and a wireless communication unit for communicating with nearby smart valve assemblies, or a central computer system.

13. An automated monitoring system for detecting conditions in pipings, comprising:

a plurality of smart valves installed on underground fluid pipings, said smart valve adapted to receive readings from said sensors integrated into said valves, and
forwarding data to a central computer system directly to nearby smart valves for determining and monitoring the conditions of the piping, such as determining leaks in the pipings based on the readings of said sensors.

14. A leak detection method, using a set of smart valves as described in any of the claims 1 to 10, said smart valves installed on underground pipings, said method comprising gathering pressure related date for each smart valve over a period of time by storing readings from each smart valve, said period of time being sufficiently long for determining the pressure changing patterns for each smart valve, creating fingerprint of data for each smart valves and comparing the readings from each smart valve against the fingerprint of data and determining leak likelihood from the differences between the fingerprint data and actual readings of a specific smart valve.

15. A method as in claim 14, wherein said period is from one day to one year, and preferably, from one week to one month.

Fig 1

Fig 2

Fig 3A

Fig 3B

**Europäisches Patentamt**
**European Patent Office**
**Office européen des brevets**

# EUROPEAN SEARCH REPORT

Application Number

EP 15 17 5903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 600 566 B1 (LONGO DONALD R [US] ET AL) 3 December 2013 (2013-12-03) * the whole document * | 1-10, 13-15 | INV. F16K37/00 G01M3/08 |
| X | US 2013/154841 A1 (KUCERA DAVID [CZ] ET AL) 20 June 2013 (2013-06-20) * the whole document * | 1-10, 13-15 | |
| X | US 2010/269632 A1 (DLUGOSS RANDALL B [US]) 28 October 2010 (2010-10-28) * paragraph [0017] - paragraph [0026]; figures 1, 2 * | 1,4,6,7, 10,13-15 | |
| A | US 2009/206803 A1 (GUALTIERI DEVLIN M [US]) 20 August 2009 (2009-08-20) * the whole document * | 8,9 | |

TECHNICAL FIELDS
SEARCHED      (IPC)

F16K
G01M

~~The present search report has been drawn up for all claims~~

| Place of search | Date of completion of the search | Examiner |
|---|---|---|
| The Hague | 28 April 2016 | Asensio Estrada, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10, 13-15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 15 17 5903

The Search Division considers that the present European patent application does not comply with the requirements of unity of invention and relates to several inventions or groups of inventions, namely:

1. claims: 1-10, 13-15

   A smart valve

   ---

2. claims: 11, 12

   A valve assembly comprising a valve to be installed underground.

   ---

## ANNEX TO THE EUROPEAN SEARCH REPORT
## ON EUROPEAN PATENT APPLICATION NO.

EP 15 17 5903

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2016

| Patent document cited in search report | | Publication date | Patent family member(s) | Publication date |
|---|---|---|---|---|
| US 8600566 | B1 | 03-12-2013 | NONE | |
| US 2013154841 | A1 | 20-06-2013 | NONE | |
| US 2010269632 | A1 | 28-10-2010 | CN 101876832 A<br>DE 102010017930 A1<br>US 2010269632 A1 | 03-11-2010<br>23-12-2010<br>28-10-2010 |
| US 2009206803 | A1 | 20-08-2009 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110083746 A
- US 20110066297 A
- US 2011025511 A
- US 20120056711 A
- EP 2006654 A
- US 20080300803 A
- US 20090303057 A
- EP 1452846 A
- US 5708195 A
- EP 1373768 A
- EP 1636519 A
- EP 2224154 A
- EP 2673537 A